## Europäisches Patentamt
## European Patent Office
## Office européen des brevets

(19)

(11) Numéro de publication: **0 112 260**
**B1**

## (12) FASCICULE DE BREVET EUROPÉEN

(45) Date de publication du fascicule du brevet:
02.07.86

(51) Int. Cl.⁴: **A 23 C 19/064,** A 01 J 25/00

(21) Numéro de dépôt: 83420178.2

(22) Date de dépôt: 24.11.83

(54) Procédé de salage des grains de caillé de fromage permettant la maîtrise de l'évolution fermentaire du caillé en cours de travail technologique, et la machine pour la mise en oeuvre du procédé.

(30) Priorité: 29.11.82 FR 8220235

(43) Date de publication de la demande:
27.06.84 Bulletin 84/26

(45) Mention de la délivrance du brevet:
02.07.86 Bulletin 86/27

(84) Etats contractants désignés:
BE CH DE GB IT LI NL SE

(56) Documents cité:
GB-A-2 072 480
US-A-3 078 169
US-A-3 910 174
US-A-4 288 465

(73) Titulaire: **CENTRE LAIT Union de Coopératives Agricoles, boulevard du Vialenc, F-15013 Aurillac Cedex (FR)**

(72) Inventeur: **Petronilli, Jean, Salavert, F-15130 Arpajon sur Cere (FR)**

(74) Mandataire: **Dupuis, François, Cabinet Charras 3 Place de l'Hôtel- de- Ville, F-42000 St.Etienne (FR)**

LIBER, STOCKHOLM 1986

## Description

L'invention se rattache au secteur technique de la fabrication de fromages.

Afin de mieux comprendre l'objet de l'invention, il y a lieu, préalablement, d'exposer l'environnement et les contraintes de la fabrication de fromages.

L'art du fromager consiste à diriger les fermentations afin de modifier avec précision le "substrat lait": flore bactérienne, température, pH, acide lactique, déminéralisation, humidité, équipement enzymatique.

Les différentes etapes successives sont: incubation du lait, coagulation, travail mécanique du coagulun égouttage/ pressage, affinage.

C'est ce substrat modifié à chaque étape qui, partant d' une matière première identique, permet d'obtenir des produits finis aussi différents que ceux couramment commercialisés sous les dominations: petits suisses, Camembert, Saint-Nectaire, Cantall Gruyère, Parmesan, etc...

On rappelle que les modifications chimiques (acidification, déminéralisation) se font essentiellement au cours des quatre premières étapes dont les temps évoluent généralement de 40 minutes à 4 heures. Elles sont quasiment terminées à la fin de l'égouttage/pressage dont les temps évoluent généralement de 4 à 24 heures.

La maîtrise du développement de fermentations à chacune des étapes est très difficile à réaliser. En effet, l'activité des cultures de ferments lactiques qui ont servi à ensemencer le lait est variable d'un jour à l'autre ainsi que l'activité biologique des laits à transformer. On ne peut à chaque instant bouleverser les temps technologiques ou les températures pour les adapter à la vitesse de fermentation.

Il y a lieu de rappeler également que l'une des opérations essentielles dans la fabrication des fromages est l'opération de salage. En effet, si le sel est un élément de saveur, il est hygroscopique et concourt même en solution à l'égouttage du caillé. Il sélectionne les bactéries lactiques en fonction de leur tolérance au sel, et selon le taux, il tempère ou inhibe leur croissance.

A ce titre, il est très important d'en maîtriser le taux et la répartition dans la masse du fromage, le plus tôt possible, afin de conserver l'homogénéité du milieu: hygrométrie, activité bactérienne avec leurs conséquences (production d' acide lactique, déminéralisation, pH, activité enzymatique).

Or actuellement, la phase de salage s'effectue soit avant moulage du caillé égoutté et pressé, au moyen de sel sec soit après démoulage du fromage, également au moyen de sel sec soit enfin par immersion du fromage après démoulage, dans une saumure saturée.

Il résulte de ces méthodes de salage, des taux de sel dans le fromage, qui, bien que se situant dans une fourchette visée, peuvent présenter des différences importantes entre différentes fabrications ou entre les fromages d'une même fabrication. On ne maîtrise pas le salage dans la masse du fromage par le procédé de salage en surface (par l'extérieur) avec du sel sec ou en saumure.

A titre d'exemple non limitatif, un fromage bleu contient en fin de salage: 14 % de sel en croûte et 0,3 % à coeur. Pour atteindre un relatif équilibre salin dans la masse il faudra plus de 30 jours pendant lesquels toutes les parties hétérogènes du fromage évolueront selon des rythmes différents.

Il existe une méthode pour le salage du caillé de fromages divulguée par le Brevet GB numero 2.072.480. Selon cette méthode, le caillé préssé est découpé en cossettes, puis déplacé dans une zône de traitement, sous forme de couche, puis il est agité et aspergé d'un liquide composé de sérum de fromage et de sel. Cette méthode est particulière et limitative et ne permet pas un contrôle rigoureux du taux de salage. Elle s'applique exclusivement aux fromages du type CHEDDAR.

On connaît également une méthode de fabrication de fromage du type CHEDDAR décrite dans le Brevet US MACADAM numéro 3.078.169. Le but recherché selon ce Brevet était de supprimer les mauvaises conditions sanitaires et de travail dans la fabrication du fromage type CHEDDAR en évitant également que la qualité de celui-ci ne dépende de l'appréciation visuelle et subjective de l'operateur. Ce Brevet décrit une méthode qui comprend la formation d'une masse de caillé pressé par application d'une pression extérieure, une augmentation de celle-ci en fonction du taux d'acide en vue d'une réduction du taux d'humidité (opération de cheddarisation); le caillé étant ensuite découpé en tranches, puis après une nouvelle pression exercée sur celles-ci, les tranches sont broyées en cossettes; ces cossettes sont lavées puis ensuite salées dans un bain de saumure. De nombreuses interventions sont exécutées sur les tranches puis les particules traitées (interventions en pression, broyage, lavage) durant l'activité de fermentation modifiant continuellement leurs caractéristiques. Cette méthode est essentiellement une automatisation de la technique ancienne et elle ne correspond pas au but recherché selon l'invention qui est la maîtrise fermentaire des grains de caillé en cours de travail.

L'innovation technologique du procédé selon l'invention est essentielle dans la mesure où elle permet, à un moment critique de la fabrication (au cours duquel antérieurement on n' avait aucum moyen d'intervenir: fin du travail mécanique en cuve/égouttage/pressage) de ralentir ou d'accélérer l'activité des fermentations et donc de maîtriser la modification du substrat, sans avoir à subir les conséquences de la poursuite de cette activité liée à la température, au cours de la phase d'égouttage.

Un autre but selon l'invention était de réaliser une machine pour la mise en oeuvre de l'invention.

Selon une première caractéristique de l'invention, à la fin du travail mécanique et de l'égouttage, on procède à un traitement en vue de ralentir ou d'accélérer l'activité des fermentations des grains de caillé permettant ainsi la maîtrise de la modification du substrat. Ce traitement consiste à immerger les grains de caillé dans un bain de saumure, sans modification de leur aspect à une température contrôlée du bain indépendante de la température au cours de la phase d'égouttage et en salant les grains de caillé dans le bain de saumure salé à un taux déterminé, constant et contrôlé, lesdits grains de caillé étant évacués vers une zône d'égouttage d'où ils sont collectés dans des proportions appropriées pour être introduits dans des cuves de pressage ou dans un moule en vue de la fabrication du fromage et de l'obtention de sa forme définitive.

Selon une autre caractéristique, le procédé est remarquable en ce que la température de la saumure est régulée, ce qui permet d'agir précisément sur la température des grains de caillé à la sortie de la machine à saler et donc de déterminer la température précise du fromage au début du moulage. De ce fait, on peut donc indépendamment de la température de fabrication exigée par la technologie, influencer et diriger l'activité lactique. Selon une autre caractéristique de l'invention, la machine pour la mise en oeuvre du procédé comprend: un châssis présentant une ossature inférieure à partir de laquelle sont disposés des montants munis de moyens d'élévation, une plateforme intermédiaire sur laquelle repose en débordement le bac de trempage, une structure profilée porteuse à l'une des extrémités de ladite plateforme; une ossature positionnée de manière réglable sur les montants verticaux; des tapis convoyeurs entourant respectivement d'une part, la partie inférieure de la machine comprenant le bac de détrempage et la structure porteuse et d'autre part, l'ossature supérieure; le cheminement desdits tapis étant assuré par tous moyens appropriés.

Pour bien fixer l'objet de l'invention, sans toutefois le limiter, aux figures des dessins où:
la figure 1 est une vue de face, en coupe longitudinale de la machine, illustrant le cheminement des grains de caillé à saler,

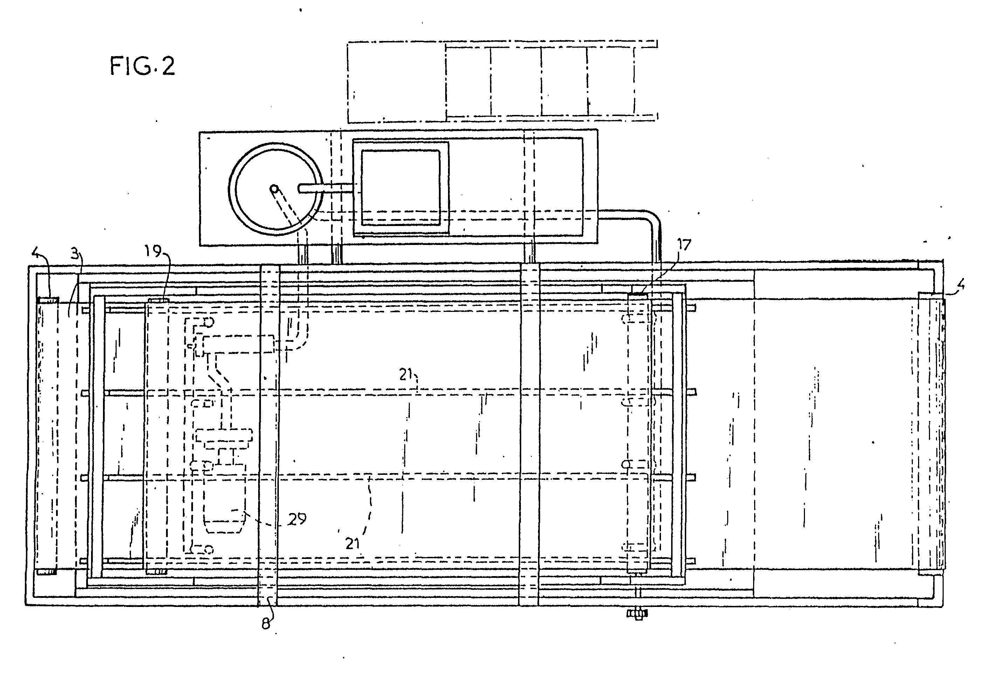

la figure 2 est une vue de dessus de la machine selon la figure 1,

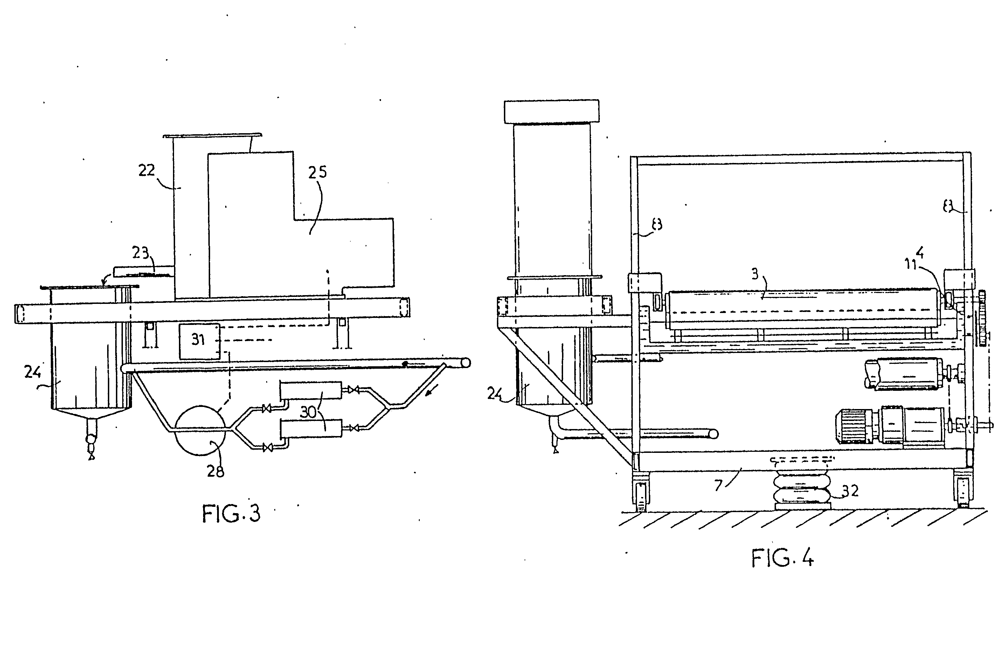

la figure 3 est une vue de profil selon la figure 2,
la figure 4 est une vue à caractère schématique, illustrant les moyens de dosage du bain de saumure,
la figure 5 est une vue de face en coupe longitudinale de la machine selon une variante de réalisation,

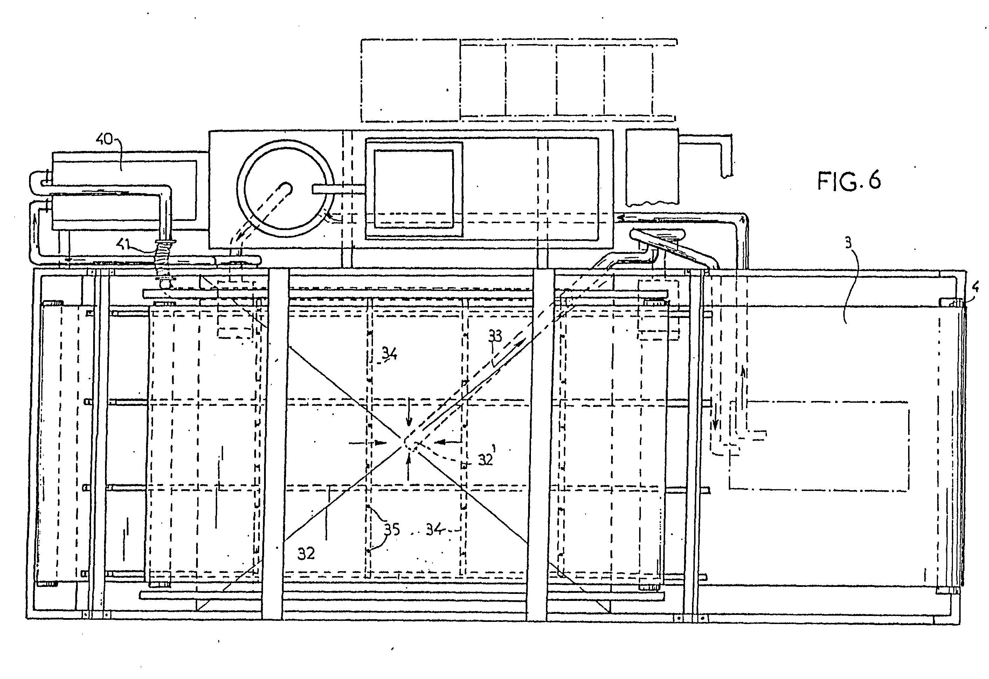

la figure 6 est une vue de dessus de la machine selon la figure 5.

Afin de rendre plus concret l'objet de l'invention, on le décrit maintenant d'une manière non limitative illustrée aux figures des dessins.

On expose préalablement, les phases de fabrication du fromage, connues en tant que telles, où l'on insérera le procédé selon l'invention.

Selon la technique connue, la coagulation du lait à l'intérieur d'une cuve de grande capacité, 5 000 litres par exemple, entraîne la formation d'une masse gélatineuse ou coagulum, qui est ensuite découpé au moyen de grillages plongeant dans la cuve pour constituer des grains de caillé ayant une forme en petits cubes de volume correspondant par exemple et non limitativement à 1 cm$^3$. Après prélèvement dans la cuve par des moyens appropriés, les grains de caillé égouttés ou non sont ensuite introduits dans un moule pour donner au fromage sa forme définitive. L'opération de salage s'effectue dans les conditions énoncées précédemment dans le préambule de la Demande.

La température de coagulation et de travail en cuve selon l'art antérieur est un compromis découlant des nécessités technologiques (développement de la fermentation lactique qui concourt à la synérésie du coagulum, fermeté du coagulum et donc son aptitude à subir le travail mécanique) et de la température d'égouttage du grain de caillé en moule en égouttage spontané ou sous presse.

Une des caractéristiques selon l'invention réside dans le fait que les températures précitées ne sont plus liées, ainsi qu'il apparaîtra dans la suite de la description.

Pour assurer la mise en oeuvre du procédé on décrit ci-après la machine, objet également de l'invention, cette machine étant disposée entre les moyens assurant l'égouttage des grains de caillé sur le tapis et les moyens pour le moulage du fromage à sa forme définitive.

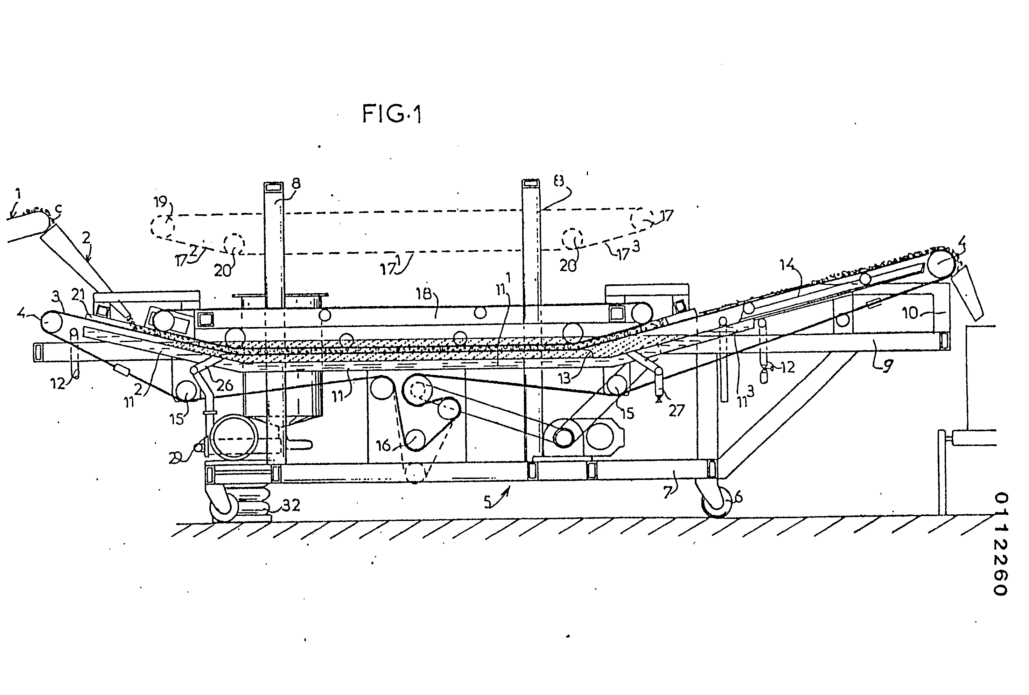

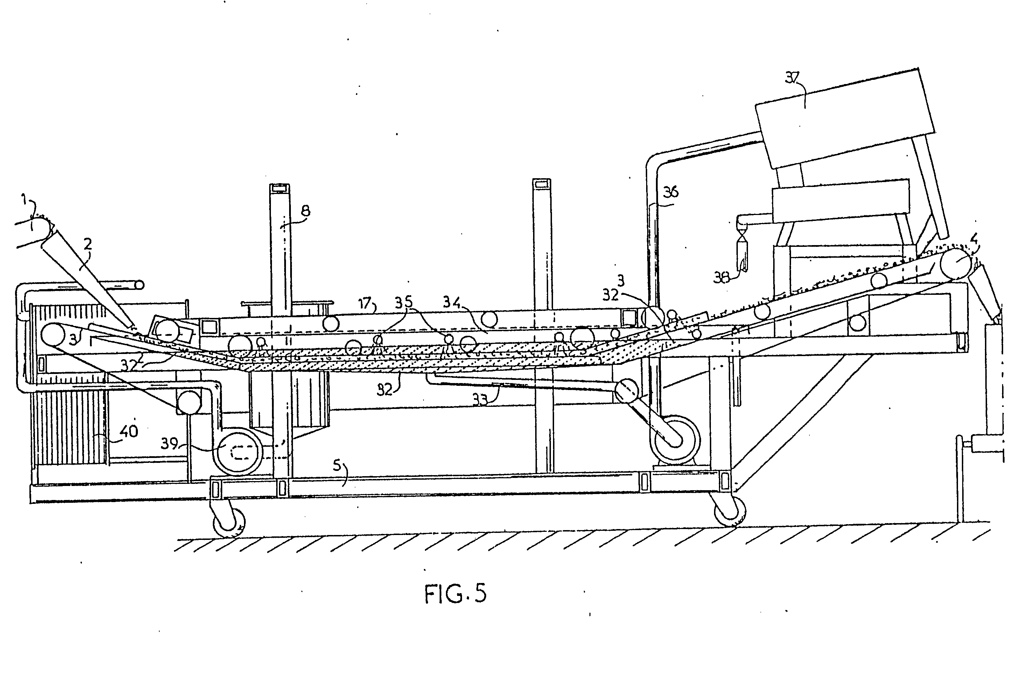

Comme illustré figures 1 et 5, le mélange grains de caillé - sérum est, à la sortie de la cuve non illustrée, dirigé sur un tapis convoyeur (1) pour la séparation du caillé du sérum, ce qui correspond à la phase d'égouttage. Selon l'invention les grains de caillé (C) glissent par gravité, sur une goulotte (2) inclinée vers le bas, de manière à permettre le positionnement desdits grains sur un autre tapis convoyeur (3) qui se présente sous la forme d'une bande sans fin de largeur appropriée et dont les rouleaux d'entraînement (4) opposés et extrêmes définissent sensiblement la longueur de la machine. Ladite machine comprend un châssis (5) monté sur des moyens de roulement (6), en vue de son déplacement; le châssis présentant notamment une ossature inférieure (7) à partir de laquelle sont disposés verticalement des montants (8) munis de moyens d'élévation, ainsi qu'il sera décrit par la suite, une plateforme intermédiaire (9) sur laquelle se trouve, à l'une de ses extrémités, une structure profilée porteuse (10); un bac (11) formant réservoir est convenablement fixé sur cette plateforme.

Selon la figure 1, le bac (11) est à double paroi, de manière à autoriser intérieurement la circulation d'un fluide de refroidissement ou de réchauffage. Des chicanes ou autres moyens sont établies sur la totalité de la surface du bac pour uniformiser cette opération de refroidissement ou de réchauffage. Des canalisations (12) sont prévues avec vannes, pompes et autres moyens, en vue d'assurer la régulation automatique du recyclage du fluide qui est en l'occurence, de l'eau froide ou chaude.

Le bac (11) tel qu'illustré notamment figure 1, présente un profil particulier avec une paroi de fond médiane (11¹) horizontale, et deux parois d'extrémités (11² - 11³) inclinées en sens opposé. Ledit bac présente en outre des rebords longitudinaux (11⁴). La paroi de fond (11¹) est sensiblement à un niveau inférieur au plan horizontal de la plateforme intermediaire (9), tandis que les extrémités (11² - 11³) des parois inclinées, sont sensiblement au-dessus dudit plan.

Sur la paroi de fond prend appui une glissière horizontale (13) fixe, sur laquelle se déplace le brin supérieur du tapis (3). Les conduits d'arrivée et d'évacuation du fluide de refroidissement sont disposés aux extrémités des parois inclinées (11² - 11³) du bac qui forme réservoir, d'une capacité de 400 à 500 litres et reçoit à cet effet, un bain de saumure ou autre composition.

Selon la figure 5, en variante le bac présente une forme sensiblement différente et est référencé en (32). Il est realisé sous la forme d'une cuve avec des pans inclinés (32,) vers la zône centrale. Dans celle-ci est prévue une ouverture (32¹) à partir de laquelle est disposé un conduit (33) d'évacuation de la saumure, ainsi qu'il sera précisé ultérieurement.

Ainsi qu'il apparaît aux figures des dessins, la paroi inclinée (11² - 32²) du réservoir est dirigée vers la goulotte (2) d'amenée des grains de caillé tandis que l'autre paroi (11³ - 32³) est orientée vers la zône de moulage du fromage en étant prolongée par une plaque support (14). Cette plaque est en appui d'une part, sur l'extrémité de la paroi du réservoir, et d'autre part, sur la structure porteuse (10), en étant maintenue en position d'une manière appropriée.

Le tapis convoyeur (3) sous forme de bande sans fin, est entraîné en déplacement par deux rouleaux (4) dont l'un est disposé de manière appropriée, au-delà de la paroi inclinée (11² - 32²) du bac, et l'autre, su-delà de son autre paroi inclinée (11³ - 32³). La bande sans fin entoure de ce fait, le bac et la plaque support. Le tapis (3) est convenablement guidé par exemple au moyen de galets de renvoi (15), d'un dispositif tendeur (16) et de moyens de guidage définissant son cheminement.

Ainsi qu'illustré figure 5 par exemple, l'entraînement du tapis (3) peut être obtenu par un groupe motoréducteur et tout dispositif mécanique approprié.

Le brin supérieur dudit tapis suit un profil correspondant au profil du bac (11) avec un plan incliné descendant un plan horizontal en appui et guidage sur la glissière et un plan ascendant jusqu'au second rouleau d'entraînement (4).

Trois zônes apparaissent ainsi, l'une correspondant à l'amenée des grains de caillé vers le bas l'autre à l'immersion des grains de caillé dans un bain de saumure, le brin supérieur du tapis étant lui-même immergé, et une troisième zône d'égouttage correspondant sensiblement à la partie ascendante du plan incliné dudit tapis.

Selon une autre caractéristique de l'invention, on prévoit un autre tapis (17) destiné à venir partiellement en regard du brin supérieur du tapis (3), et plus particulièrement dans la totalité de la zône de trempage des grains de caillé.

A cet effet, ce tapis (17) est monté de manière appropriée sur une ossature (18) susceptible d'être élevée ou abaissée par rapport à la position fixe du tapis (3). Ladite ossature est positionnée sur les montants verticaux (8) de l'ossature inférieure (7); l'élévation ou l'abaissement s'effectuant par des moyens appropriés du type crémaillère, chaîne ou autre. Ce tapis (17) se présente également sous la forme d'une bande sans fin, de plus petite longueur que le tapis (3), entraînée en rotation par des rouleaux d'entraînement (19) et guidée par des galets de renvoi (20). Le cheminement de cette bande est définitif. Le brin inférieur (17¹) du tapis a un profil correspondant exactement à celui du brin supérieur du tapis (3) à savoir un plan horizontal et deux parties extrêmes (17² - 17³) inclinées en sens opposé de manière à épouser partiellement les formes des profils extrêmes du tapis inférieur. Ce brin (17¹) est également immergé en totalité dans le bain ou saumure ou autre.

Les grains de caillé en provenance de la phase initiale d'égouttage, sont donc acheminés sans modification de leur aspect par le tapis (3) dans le bain de saumure en étant maintenus prisonniers entre les deux tapis à l'endroit de jonction, et libérés, à l'endroit de séparation des deux tapis. Selon l'écartement règlable, prévu entre lesdits tapis l'on peut traiter des couches de grains de caillé de dimensions variables.

Dans le sens longitudinal du bac est prévue une structure (21) avec entretoises ou équivalent, solidaire de l'ossature supportant le tapis supérieur, de manière à compartimenter la largeur des tapis pour un approvisionnement régulier des grains de caillé, et d'autre part, pour assurer un intervalle préétabli constant, entre les deux tapis. Pour régler cet intervalle, il suffit de modifier la structure qui est facilement démontable.

D'autres moyens de réglage de l'intervalle entre les tapis peuvent être prévus.

Ainsi qu'il apparaît clairement, les grains de caillé sont immergés dans le bain de saumure pendant une période déterminée fonction de la vitesse de défilement des tapis qui tournent à la même vitesse; le tapis supérieur maintenant immergé le caillé, de densité plus faible que la saumure. Les tapis sont mis en mouvement par une commande appropriée de un ou deux moteurs réducteurs à variation de vitesse.

La saumure est obtenue avantageusement, à partir de lactosérum et de sel. La composition de lactosérum présente l'avantage d'être identique à celle qui s'exsude du caillé, ainsi les échanges sont strictement limités au sel sans dilution des composants du sérum que contient le grain de caillé. La température de la saumure se situe entre 24 et 36 degrés centigrades; sa concentration en poids de sel est de 10 à 20 %, et avantageusement de 12 %; le temps d'immersion des grains de caillé dans la saumure est de l'ordre de 10 à 30 secondes; le temps d'égouttage après immersion de l'ordre de 15 à 30 secondes.

Par ailleurs la machine comprend un dispositif de recyclage en continu de la saumure, avec régulation de sa temperature et de son pourcentage en sel. Il est en effet nécessaire de procédér à des vérifications constantes de la teneur en sel du bain de saumure, afin que les produits traités soient de qualité constante.

L'on prévoit en outre, un réservoir (22) contenant du sel sec, muni d'un conduit d'échappement (23) débouchant au-dessus d'une cuve de mélange (24) pour la dissolution du sel et la préparation de la saumure. Un doseur volumétrique (25) assure la commande ouverture-fermeture de la vanne du réservoir (22).

Ainsi qu'illustré figure 1, le bac (11) contenant le bain de saumure, est inséré dans le circuit de recyclage par une canalisation (26) d'amenée de la saumure régénérée et une canalisation (27) d'évacuation de la saumure utilisée.

Selon la variante de la figure 5, la saumure régénérée, de la manière qui sera décrite ultérieurement, est distribuée par un système de rampes (34) munies d'une pluralité de buses (35), disposées au-dessus du bain de saumure; son évacuation est assurée par le conduit (33) disposé dans le fond de la cuve.

La saumure utilisée est ensuite acheminée par des conduits appropriés vers un dispositif de filtration (30) des pompes ou autres moyens permettant la circulation de ladite saumure.

Selon la figure 5, la saumure est conduite par la canalisation (36) dans un filtre (37), tel que celui vendu dans le commerce sous la dénomination SERMIA. Les particules en suspension sont retenues par ce filtre puis ajoutées au caillé salé et égoutté.

La saumure utilisée est ensuite évacuée par une canalisation (38) sur laquelle est branchée un réfractomètre (28) vers un bac d'homogénéisation (24).

La lecture de la concentration est assurée par ce capteur d'indice de réfraction sur une partie du liquide filtré.

Ce réfractomètre automatique commande, en fonction des paramètres choisis et de l'indice de réfraction mesuré, susceptible de traduire un appauvrissement en sel, un signal électrique modulé actionnant le doseur de sel sec (25). Le sel sec tombe dans la cuve d'homogénéisation où il est instantanément dissous.

Selon la réalisation de la figure 1 la saumure ainsi régénérée est ensuite refoulée, au moyen de pompes (29) ou autres organes nécessaires, dans le fond du bac de saumure (22), selon une orientation appropriée l'obligeant à traverser la couche de grains de caillé prise entre les deux tapis. La saumure appauvrie est aspirée en surface, puis recyclée.

Selon la réalisation de la figure 5, la saumure régénérée est refoulée au moyen de pompes (39) dans un échangeur thermique à plaques, tel que celui connu sous la dénomination "Plaques Varitherm" (40), ceci afin de stabiliser la saumure à une température déterminée. Ladite saumure est ensuite acheminée par un conduit flexible (41) ou autre vers la rampe de distribution (34) disposée au-dessus du bain.

De plus, un contrôle approprié de la température des grains de caillé permet de les maintenir à température constante. Une sonde thermostatique ou moyen équivalent est utilisée à cet effet.

La régulation combinée du taux de sel dans le caillé et de la température de ce dernier, permet d'orienter de façon précise l'activité lactique et donc d'obtenir en fin d'égouttage un substrat de fromage désiré, spécifique à la fabrication visée: pH - humidité - sel - population lactique - potentiel d'activité enzymatique. La régulation générale est assurée à partir d'un coffret de commande (31).

Si la technologie l'exige, un complément de sel peut être ajouté en surface, soit parce que l'on a salé le caillé à un taux inférieur à la norme pour permettre une évolution de la fermentation plus rapide du substrat soit pour obtenir une légère dessication de la croûte.

Par ailleurs, on souligne que le procédé offre d'autres avantages. Compte tenu du fait que les températures de coagulation et de travail d'une part et d'égouttage d'autre part, ne sont plus liées, de nouvelles possibilités technologiques sont offertes; ensemencement plus important en ferments lactiques température plus élevée et donc développement de l'activité lactique plus importante au cours des phases de fabrication emploi de germes plus protéolytiques.

Le salage des grains de caillé par immersion dans du sérum salé à un taux déterminé et constant a les effets suivants:

- Il a une action importante sur le développement des bactéries et selon le taux il tempère ou inhibe leur croissance. - Selon le taux également, il sélectionne les bactéries lactiques en fonction de leur tolérance au sel. En particulier, il freine le développement des bactéries acidophiles et favorise de ce fait les bactéries dites d'arome (S. Diacétylactis) qui sont halotolérantes.

- Il diffuse rapidement dans la masse du caillé et maintient l'homogénéité du milieu. Les fermentations se poursuivent de la même façon dans la masse ce qui n'est pas le cas du salage du caillé pressé et broyé, et à fortiori lors du salage en surface du fromage moule.

Enfin et selon une disposition accessoire de la machine on prévoit son nettoyage et sa vidange.

Selon la figure 1, ces opérations sont assurées grâce à l'inclinaison de la machine.

Pour faciliter les opérations, l'ensemble du tapis supérieur peut être remonté, ainsi que le bloc entretoise qui y repose.

Le tapis inférieur ainsi libéré, remonte en même temps et s'aligne entre les rouleaux de tête et de queue, dégageant ainsi le fond du bac. On procède alors à l'inclinaison de la cuve, au moyen de pneuride disposé sous le châssis.

Selon la figure 5, on utilise le système de canalisation et de rampe pour la distribution de la saumure pour assurer le nettoyage de la cuve et des tapis au moyen d'un autre fluide tel que l'eau par exemple. Dans ce cas, la saumure est stockée dans un bac illustré aux dessins. Le circuit comprend alors un système de vannes et une commande appropriée pour assurer les différentes opérations.

On prévoit dans le cadre de l'invention que le recyclage du bain de saumure peut s'effectuer par pasteurisation.

Les avantages ressortent bien de la description. On souligne en particulier le but recherché selon l'invention et les résultats obtenus.

Il est bien évident que, sans pour autant sortir du concept inventif décrit selon ce procédé de salage, d'autres modifications peuvent être apportées à la machine en vue d'une même opération.

## Revendications

-1- Procédé de salage des grains de caillé de fromages en cours de travail technologique de traitement du fromage comprenant les phases d'incubation de lait, coagulation travail mécanique s'effectuant dans une cuve de fabrication en vue de fabriquer des grains de caillé à partir du coagulum égouttés ensuite, ledit procédé étant caractérisé en ce que, à la fin du travail mécanique et de l'égouttage, on procède à un traitement en vue de ralentir ou d'accélérer l'activité des fermentations des grains de caillé permettant la maîtrise de la caillé du substrat, ce traitement consistant à immerger les grains de caillé dans un bain de saumure, sans modification de leur aspect à une température contrôlée du bain indépendante de la température au cours de la phase d'égouttage, et en salant les grains du caillé dans ce bain de saumure salé à un taux déterminé, constant et contrôlé, lesdits grains de caillé étant évacués vers une zône d'égouttage d'où ils sont collectés dans des proportions appropriées, pour être introduits dans des cuves de pressage ou dans un moule en vue de la fabrication du fromage et de l'obtention de sa forme définitive.

-2- Procédé selon la revendication 1, caractérisé en ce que le bain de saumure se compose de lactosérum et de sel.

-3- Procédé selon la revendication 2, caractérisé en ce que le bain de saumure est régulé en température de l'ordre de 24 à 36 degrés centigrades, ce qui permet de réguler la température du caillé lors de son égouttage ultérieur.

-4- Procédé selon la revendication 1, caractérisé en ce que le temps d'immersion des grains de caillé dans le bain de saumure est de l'ordre de 10 à 30 secondes, selon le taux de concentration en sel de la saumure-sérum, la température de celle-ci et le taux de sel recherché pour le fromace.

-5- Procédé selon la revendication 1, caractérisé en ce que lors du recyclage du bain de saumure on procède à son analyse en vérifiant sa température et sa teneur en sel, par des moyens appropries, et l'on procède si necessaire à une régéneration du bain par adjonction de sel.

-6- Machine pour la mise en oeuvre du procédé selon la revendication 1, caractérisée en ce qu'elle comprend un châssis (5) présentant une ossature inférieure à partir de laquelle sont disposés des montants (8) munis de moyens d'élévation, une plateforme intermédiaire (9) sur laquelle repose en débordement le bac de trempage (11 - 32),une structure profilée porteuse (10) à l'une des extrémités de ladite plateforme; une ossature (18) positionnée de manière réglable sur les montants verticaux; des tapis convoyeurs (3 - 17) entourant respectivement d'une part la partie inférieure de la machine comprenant le bac de détrempage et la structure porteuse (10) et d'autre part, l'ossature supérieure (18); le cheminement des dits tapis étant assuré par tous moyens appropriés.

-7- Machine selon la revendication 6, caractérisée en ce que le bac de trempage (11 - 22) comprend une paroi de fond à un niveau sensiblement inférieur au plan horizontal de la plateforme intermédiaire des parois d'extrémités inclinées en sens opposé l'une desdites parois étant dirigée vers la goulotte d'amenée des grains de caillé, l'autre paroi étant orientée vers la zône d'égouttage en étant prolongée par une plaque support (14) en appui notamment sur la structure porteuse.

-8- Machine selon la revendication 6, caractérisée en ce que le profil du brin supérieur du tapis convoyeur (3) est semblable au profil du brin inférieur du tapis convoyeur (17), lesdits profils en regard comprenant un plan horizontal (11'-17') et deux plans extrêmes ($11^2$, $11^3$, $17^2$, $17^3$) opposés, les brins ($11^1$ et $17^1$) se situant à l'intérieur du volume du bac de trempage de manière à être immergés dans le bain, lesdits brins ($11^1$ - $17^1$) définissant un intervalle entre eux correspondant à l'emplacement des grains de caillé.

-9- Machine selon la revendication 6, caractérisée en ce qu'elle comprend des moyens pour assurer le nettoyage de la cuve et des tapis convoyeurs et la vidange de la cuve.

## Patentansprüche

- 1 - Einsalzverfahren für die Käsegerinnbohnen im Lauf der technologischen Arbeit der Aufbereitung des Käses, das die folgenden Arbeitsvorgänge miterfasst: Milchinkubation; Gerinnen; mechanische Arbeit, in einer Herstellungswanne zur Herstellung der Gerinnbohnen aus dem Koagulum, mit nachfolgendem Abtropfen der Bohnen, dadurch gekennzeichnet, dass bei Beendigung der mechanischen Arbeit und des Abtropfens eine Bearbeitung zum Verlangsamen oder zum Beschleunigen der Tätigkeit der Gärungen der Gerinnbohnen für das Bemeistern des Gerinnens des Substrats ausgeführt wird, die daraus besteht, dass die Gerinnbohnen ohne Veränderug ihres Aussehens in einem Salzsolebad bei einer Temperatur eingetaucht werden, die für dieses Salzsolebad kontrolliert und unabhängig von der Temperatur im Lauf des Abtropfens ist, sowie bei Einsalzen der Gerinnbohnen in diesem Salzsolebad, das entsprechend einem vorbestimmten, beständigen und kontrollierten Einsalzwert gesalzt wird, wobei die besagten Gerinnbohnen danach nach einer Abtropfenzone geführt werden, wo sie in geeignetem Ausmass zur Einführung in Auspressenwannen oder in eine Form für die Herstellung des Käses und das Erreichen der endgültigen Formgebung desselben gesammelt werden.

- 2 - Verfahren nach Anspruch 1, dadurch gekennzeichnet, dass das Salzsolebad aus Lactoserum und Salz besteht.

- 3 - Verfahren nach Anspruch 2, dadurch gekennzeichnet, dass das Salzsolebad auf eine Temperatur von circa 24 bis 36 Celsiusgraden geregelt wird, wobei die Gerinntemperatur bei dem nachfolgenden Abtropfen reguliert werden kann.

- 4 - Verfahren nach Anspruch 1, dadurch gekennzeichnet, dass die Eintauchzeitdauer der Gerinnbohnen in dem Salzsolebad, in Abhängigkeit von dem Salzkonzentrationswert der Serumbrühe, von der Temperatur derselben und von dem für den Käse gesuchten Salzwert circa 10 bis 30 Sekunden beträgt.

- 5 - Verfahren nach Anspruch 1, dadurch gekennzeichnet, dass bei dem Wiederumlauf des Salzsolebades die Analyse desselben mit Prüfung der Temperatur und des Salzgehalts dieses Bades durch geeignete Massnahmen durchgeführt wird, wobei im Bedarfsfall eine Wiederregenierung des Bades durch Salzbeimengung stattfindet.

- 6 - Maschine zur Durchführung des Verfahrens nach Anspruch 1, dadurch gekennzeichnet, dass diese Maschine einen Rahmen (5) mit einem Untergerüst aufweist, ab welchem die folgenden Bauteile angebracht sind: die mit Hebemitteln versehenen Ständer (8); eine Zwischenplattform (9), auf welcher ein Durchfeuchtentrog (11-32) herausragend sitzt; eine an dem einen Ende der besagten Plattform angeordnete, profilierte, tragende Struktur (10); ein auf die senkrechten Ständer verstellbar positioniertes Gerüst (18), wobei die Förderbänder (3 - 17) beziehungsweise einerseits den den Durchfeuchtentrog und die tragende Struktur (10) aufweisenden Unterteil der Maschine und andererseits das Obergerüst (18) einschliessen und die Bewegung der besagten Bänder durch beliebige geeignete Mittel erreicht wird.

- 7 - Maschine nach Anspruch 6, dadurch gekennzeichnet, dass der Durchfeuchtentrog (11 - 22) eine auf einer wesentlich tieferen Höhe als die waagrechte Ebene der Zwischenplattform liegende Bodenwand und in entgegengesetzter Richtung geneigte Endwandungen aufweist, wobei die eine dieser Wandungen nach der Zuführungsrinne der Gerinnbohnen gerichtet ist, während die andere Wandung nach der Abtropfenzone zeigt und durch eine Tragplatte (14) verlängert wird, die insbesondere auf der tragenden Struktur abgestüzt ist.

- 8 - Maschine nach Anspruch 6, dadurch gekennzeichnet, dass der Profil des Obertrumms des Förderbands (3) dem Profil des Untertrumms des Förderbands (17) ähnlich ist, und dass die besagten, entgegengesetzten Profile eine waagrechte Ebene (11' - 17') und zwei entgegengesetzten, äussersten Ebenen ($11^2$ $11^3$, $17^2$, $17^3$) aufweisen, wobei die Trümme ($11^1$ und $17^1$) im Innern des Raums des Durchfeuchtentrogs vorgesehen sind, damit sie in dem Bad eingetaucht werden können, und die besagten Trümme ($11^1$ - $17^1$) einen Zwischenraum zwischen ihnen bestimmen, der dem Raum für die Gerinnbohnen entspricht.

- 9 - Maschine nach Anspruch 6, dadurch gekennzeichnet, dass diese Machine die geeigneten Vorrichtungen zur Reinigung der Wanne und der Bänder der Fördereinrichtung, sowie zum Entleeren der Wanne aufweist.

## Claims

- 1 - A method for salting the cheese curd grains in the course of the technological process for the treatment of the cheese, including the following steps: milk incubation; coagulation; mechanical work taking place in a processing vessel for the production of curd grains from the coagulum, which are afterwards dry drained, said method being characterized in that on completion of the mechanical work and of the dry draining, a treatment is made for slowing down or accelerating the activity of the curd grains permitting to master the curdling of the substratum, said treatment consisting in the immersion of the curd grains in a brine bath without modifying their appearance at a controlled temperature of the the bath independent of the temperature in the course of the dry draining step, and by salting the curd grains in this brine bath salted at a pre-determined, steady and controlled rate, said curd grains being discharged towards a dry draining area from where they are collected by suitable amounts to be introduced into press vessels or into a mold for the production of the cheese and the obtention of the final shape thereof.

- 2 - The method set forth in claim 1, characterized in that the brine bath consists of lactoserum and salt.

- 3 - The method set forth in claim 2, characterized in that the brine bath is regulated at a temperature ranging from 24 to 36 centigrade degrees, which permits the temperature of the curd to be monitored at the time of the subsequent dry draining thereof.

- 4 - The method set forth in claim 1, characterized in that the duration of the immersion of the curd grains in the brine bath is within the range of 10 to 30 seconds depending on the salt concentration of the serum-brine, the temperature thereof, and the salt rate which is desired for the cheese.

- 5 - The method as set forth in claim 1, characterized in that during the recycling of the brine bath, the analysis of the latter is made by checking the temperature and the salt content of said bath with the aid of suitable procedures, a regeneration of the bath being carried out by admixture of salt whenever necessary.

- 6 - A machine for implementing the method set forth in claim 1, characterized in that said machine includes a lower framework from which are disposed the posts (8) provided with lifting means, an intermediate platform (9) with the soaking vat (11 - 32) resting in a projecting manner thereon, a supporting contoured structure (10) at one of the ends of said platform; a framework (18) positioned in an adjustable manner on the vertical posts; conveyor belts (3 - 17) surrounding respectively on the one hand the lower part of the machine comprised of the soaking vat and of the supporting structure (10), and on the other hand the upper framework (18), the travelling motion of said belts being provided by any suitable means.

- 7 - The machine set forth in claim 6, characterized in that the soaking bath (11 - 22) includes a bottom wall at a level which is substantially lower than the horizontal plane of the intermediate platform, with end walls slanting in the opposite direction, one of said walls being directed towards the chute for supplying the curd grains, the other wall being directed towards the dry draining area while being extended by a support plate abutting more particularly on the supporting structure.

- 8 - The machine set forth in claim 6, characterized in that the profile of the upper side of the conveyor belt (3) is similar to the profile of the lower side of the conveyor belt (17), said profiles being arranged opposite and including a horizontal plane (11' - 17') and two opposing extreme planes ($11^2$, $11^3$, $17^2$ $17^3$), the sides ($11^1$ and $17^1$) being located whithin the volume of the soaking bath so that they will be immersed whithin the bath, said sides ($11^1$ - $17^1$) determining between them a gap which corresponds to the space for the curd grains.

- 9 - The machine set forth in claim 6, characterized in that said machine includes means for cleaning the vessel, for cleaning the conveyor belts, and for emptying the vessel.

# FIG·1

0 112 260

FIG.2

FIG. 3

FIG. 4

0 112 260

FIG.5

FIG.6

0 112 260